# EUROPEAN PATENT APPLICATION

(11) **EP 3 680 306 A1**
(43) Date of publication of application: **15.07.2020**
(21) Application number: 18854408.4
(22) Date of filing: 05.09.2018
(51) Int. Cl.: C09K 3/00, B01J 13/18, C08F 2/44

(54) **HEAT-EXPANDABLE MICROCAPSULES, PRODUCTION METHOD THEREFOR, AND FOAMED MOLDED ARTICLE**

(30) Priority: 06.09.2017 JP 2017170741
(71) Applicant: NOF Corporation, Shibuya-ku Tokyo 150-6019 (JP)
(72) Inventor: HAYASHI,Masaki, Chita-gun Aichi 470-2345 (JP); GOTO,Keiji, Chita-gun Aichi 470-2345 (JP); ITOYAMA,Ryosuke, Chita-gun Aichi 470-2345 (JP)
(74) Representative: Mewburn Ellis LLP
(86) International application number: PCT/JP2018/032835
(87) International publication number: WO 2019/049881

(57) **Abstract**

Heat-expandable microcapsules each having a core/shell structure which comprises a core and a shell, wherein the core comprises a volatile substance and the shell comprises a polymer, the polymer being obtained by reacting a monomer mixture with an organic peroxide represented by general formula (1). The heat-expandable microcapsules of the present invention have such excellent heat resistance that a yielding phenomenon can be inhibited in a wide temperature range and have a high expansion ratio. (In formula (1), the R¹ moieties each independently represent a C₂₋₁₂ unsaturated hydrocarbon group, the unsaturated hydrocarbon group being optionally separated by one or more of -CO-O-, -O-CO-, and -O-.)

## Description

### TECHNICAL FIELD

The present invention relates to a heat-expandable microcapsule, a production method for the heat expandable microcapsule, and a foamed molded article.

### BACKGROUND ART

In order to produce a lightweight resin with functionality and design properties, various types of foamed molding have been performed by using a chemical foaming agent and a physical foaming agent. Heat-expandable microcapsules have been used as the foaming agent when foaming a thin film such as coating, a material that can be readily degassed, a material in which high quality appearance is required, etc.

The heat-expandable microcapsule is a microcapsule having a core-shell structure including the shell formed from a polymer and the core containing a volatile substance that vaporizes by heat. The heat-expandable microcapsule is also called a heat-expandable microsphere or a heat-foamable microsphere. For example, Patent Document 1 discloses a heat-expandable microcapsule that can be produced by performing suspension polymerization of an oily mixed liquid containing a monomer mixture, a volatile substance, and a polymerization initiator in an aqueous dispersion medium.

An example of the polymer forming the shell is a thermoplastic resin with a good gas barrier property. An example of the volatile substance includes hydrocarbon that vaporizes at a temperature of the softening point of the polymer or below. When the heat-expandable microcapsule is heated, the polymer softens, the inner pressure of the shell increases due to the vaporization of the volatile substance in the shell to stretch the shell, and the expansion (foaming) of the heat-expandable microcapsule starts. If the heat-expandable microcapsule is continuously heated, the foaming ratio becomes larger. If the heat-expandable microcapsule is cooled at this point, the shell is solidified in a stretched state to form an expanded particle (a hollow particle). If the heat-expandable microcapsule is further continuously heated, the film forming the shell becomes thinner and the vaporized volatile substance escapes from the thin part and/or the broken part of the shell, causing the microcapsule to shrink (hereinafter, also referred to as a sag).

The sag is a phenomenon caused by insufficiency of the gas barrier property, the heat resistance, and the strength of the shell which has been stretched by expansion. For example, Patent Document 2 discloses that 0.1% by mass to 1% by mass of a crosslinking agent (a multifunctional monomer) is added in the monomer mixture to reduce the sag and improve the solvent resistance.

Patent Document 3 discloses a production method for a heat-expandable microcapsule by using a peroxide having 7.8% or more of the ideal active oxygen component as a polymerization initiator to improve the solvent resistance.

### PRIOR ART DOCUMENTS

### PATENT DOCUMENTS

Patent Document 1: JP-B-42-26524
Patent Document 2: JP-B-5-15499
Patent Document 3: JP-B2-5824171

### SUMMARY OF THE INVENTION

### PROBLEMS TO BE SOLVED BY THE INVENTION

A heat-expandable microcapsule in which the sag does not occur until the microcapsule reaches the high temperature range is generally considered to be excellent in heat resistance. A problem in the production for a foamed molded article using the heat-expandable microcapsule is to suppress the sag over a wide temperature range from a viewpoint of making the molding process easy.

However, the method of adding a small amount of the multifunctional monomer described in Patent Document 2 has a poor effect on improving the strength of the polymer forming the shell, etc. Because a micro gel locally having a high level of the crosslinking structure is also produced, the shell easily breaks due to the non-uniformity of the crosslinking structure when the shell is stretched by expansion. Therefore, the method described in Patent Document 2 is insufficient to suppress the sag at a high temperature. On the other hand, if the adding amount of the multifunctional monomer is increased, aggregation of the particles easily occurs during the suspension polymerization and a three-dimensional crosslinking structure is formed all over the polymer forming the shell even if the heat-expandable microcapsule can be produced, which causes the shell not to stretch and the foaming ratio of the shell reduces.

On the other hand, making the polymer having high molecular weight or introducing a branched structure to the polymer is considered to be effective as a means of improving the melting characteristics such as tension and strain hardening of the melt polymer. In Patent Document 3, when 2,2-bis(4,4-di-t-butylperoxycyclohexyl)propane as tetrafunctional peroxyketal is used as a polymerization initiator, four radicals are finally produced within one molecule in the decomposition process to produce a polymer having a branched structure. However, because some of those four radicals are deactivated due to a cage reaction, it is known that a polymer stretched in three directions and a straight chain polymer stretched in two directions can be also produced. Further four t-butoxy radicals are also produced by the decomposition to produce a straight chain polymer. Therefore, introducing a branched structure to the polymer is not much effective even if tetrafunctional peroxyketal is used as a polymerization initiator. The decomposition temperature of peroxyketal is generally high compared to other organic peroxides. The temperature when a half of 2,2-bis(4,4-di-t-butylperoxycyclohexyl)propane is decomposed in 10 hours is 95°C and the decomposition rate after 15 hours of the polymerization at 85°C is about 25%. In this polymerization condition, an average of one peroxidation bond is decomposed among four peroxidation bonds in the molecule and the production of a polymer with a branched structure is assumed to be very small. Although improvement of the solvent resistance is confirmed in Patent Document 4, it has not been enough to suppress the sag.

In order to solve the problems described above, the present invention provides a heat-expandable microcapsule having an excellent heat resistance and a high foaming ratio that is capable of suppressing the sag in a wide range of temperature and a production method for the heat-expandable microcapsule.

### MEANS FOR SOLVING THE PROBLEMS

The present invention relates to a heat-expandable microcapsule having a core-shell structure including a core and a shell, in which the core contains a volatile substance, the shell contains a polymer, and the polymer can be obtained by a reaction of a monomer mixture with an organic peroxide represented by Formula (1): 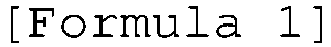 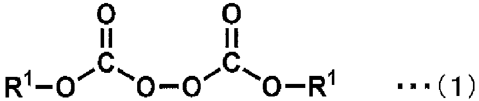 (In Formula (1), each of R¹ independently represents an unsaturated hydrocarbon group having 2 to 12 carbon atoms. The unsaturated hydrocarbon group may be interrupted by any one or more of -CO-O-, -O-CO-, and -O-.)

The present invention also relates to a production method for the heat-expandable microcapsule including at least a step of dispersing an oily mixed liquid containing the monomer mixture, the organic peroxide represented by Formula (1), and the volatile substance into an aqueous dispersion medium to obtain a dispersion and a step of reacting the monomer mixture with the organic peroxide represented by Formula (1) in the obtained dispersion to polymerize the monomer mixture.

The present invention also relates to a foamed molded article produced by using the heat-expandable microcapsule.

### EFFECT OF THE INVENTION

In general, the entire shell of the heat-expandable microcapsule is not always stretched uniformly when the shell is expanded by heat, and the thin film portion of the shell where the strength is small is stretched more and degassing and breaking of the shell occurs from the thin film portion of the shell. The heat-expandable microcapsule of the present invention is characterized in that the monomer mixture is polymerized by using the organic peroxide represented by Formula (1). Because the organic peroxide has two or more ethylenic unsaturated bonds in the molecule, it is assumed that the peroxidation bond of the organic peroxide decomposes to form a micromonomer as a product of the reaction of the monomer mixture and the micromonomer copolymerizes with the monomer mixture, resulting in that the heat-expandable microcapsule has a shell formed with a polymer having a multi-branched structure. It is also assumed that the peroxidation bond remaining in the polymer decomposes and the monomer mixture polymerizes after the copolymerization of the organic peroxide with the monomer mixture, resulting in that the heat-expandable microcapsule has a shell formed with a polymer having a multi-branched structure. When the shell of the heat-expandable microcapsule formed with a polymer having a multi-branched structure is stretched by thermal expansion, the thin film portion of the shell that is largely stretched becomes difficult to be stretched further due to an increase of its viscosity caused by strain hardening (a phenomenon in which the viscosity of a polymer having a highly branched structure rapidly increases when stretched further. However, the thick film portion of the shell where the increase of its viscosity is milder is stretched further. Therefore, the microcapsule is assumed to be stretched uniformly as a whole. As a result, it is considered that degassing and breaking of the polymer do not occur easily. Therefore, the heat-expandable microcapsule of the present invention can suppress the sag at high temperature and is excellent in heat resistance.

Because the heat-expandable microcapsule of the present invention in which no multifunctional monomer is practically used is assumed to have no three-dimensional crosslinking structure according to the polymerization mechanism described above, the foaming ratio is high.

Therefore, when the heat-expandable microcapsule of the present invention is used, a foamed molded article can be easily produced under broad conditions of the foam molding process.

### BRIEF DESCRIPTION OF THE DRAWINGS

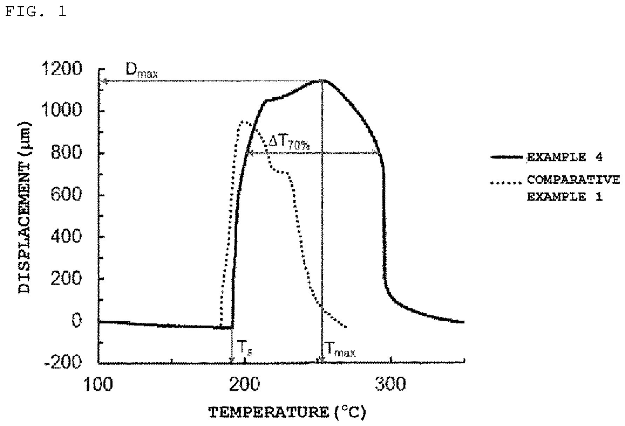

Fig. 1 shows results of TMA measurements of typical examples and comparative examples of a heat-expandable microcapsule.

### MODE FOR CARRYING OUT THE INVENTION

### <Heat-expandable microcapsule>

The heat-expandable microcapsule of the present invention has a core-shell structure including a core and a shell, in which the core contains a volatile substance that vaporizes by heat and the shell contains a polymer.

When the heat-expandable microcapsule is heated to a softening temperature or more of the polymer forming the shell, the shell is stretched due to an increase of the inner pressure caused by the vaporization of the volatile substance in the shell and the expansion starts. The softening temperature of the polymer can be appropriately selected depending on the purpose of use. However, the softening temperature of the polymer is preferably 50°C or more and 240°C or less, more preferably 80°C or more and 220°C or less, and further preferably 100°C or more and 200°C or less. The softening temperature of the polymer normally corresponds to the glass transition temperature of the polymer and can be measured with an analytical tool such as a differential scanning calorimeter (DSC).

### <DSC measurement conditions>

A sample of a polymer containing no volatile substance synthesized separately may be measured as a measurement sample. When measuring the heat-expandable microcapsule, the sample is made by dissolving and swelling the heat-expandable microcapsule in a solvent such as N,N-dimethylformamide (DMF) and drying to remove the solvent and the volatile substance.

The sample is weighed in an aluminum pan and set in the DSC. The same type of an aluminum pan without the sample is set as a reference pan. The temperature of the sample was increased at a speed of 10°C/min. The glass transition temperature can be determined from the obtained DSC chart.

The average particle size of the heat-expandable microcapsule is preferably 1 µm or more and 500 µm or less, more preferably 3 µm or more and 300 µm or less, and further preferably 5 µm or more and 200 µm or less. If the average particle size is less than 1 µm, it is not preferable because a sufficient amount of the foaming ratio cannot be obtained because the thickness of the shell is small. If the average particle size is more than 500 µm, it is not preferable because the diameter of the bubble after foaming is too large and the mechanical strength of the foamed molded article decreases. The average particle size can be measured by using the following laser diffraction particle size analyzer.

### <Laser diffraction particle distribution analysis conditions>

The average particle size of the heat-expandable microcapsule was measured by using a laser diffraction particle size analyzer (SALD-2100 manufactured by Shimadzu Corporation). The D50 (median diameter) obtained from the particle distribution curve of the particle distribution (%, a volume basis and a logarithmic scale) was calculated as the average particle size.

The foaming starting temperature (Tₛ) of the heat-expandable microcapsule is not limited. However, the foaming starting temperature (Tₛ) is preferably 50°C or more and 240°C or less, more preferably 100°C or more and 230°C or less, and further preferably 120°C or more and 220°C or less. The maximum foaming temperature (Tₘₐₓ) of the heat-expandable microcapsule is not limited. However, the maximum foaming temperature (Tₘₐₓ) is preferably 80°C or more and 300°C or less, more preferably 120°C or more and 290°C or less, and further preferably 150°C or more and 280°C or less. If the foaming starting temperature (Tₛ) and the maximum foaming temperature (Tₘₐₓ) of the heat-expandable microcapsule are too low, it is not preferable because foaming occurs during kneading before molding. If the foaming starting temperature (Tₛ) and the maximum foaming temperature (Tₘₐₓ) of the heat-expandable microcapsule are too high, it is not preferable because foaming does not occur during molding. The foaming starting temperature (Tₛ) can be obtained with a measurement method by a thermomechanical analyzer (TMA).

### <Polymer>

The polymer of the present invention is a polymer obtained from a reaction of a monomer mixture with an organic peroxide represented by Formula (1): 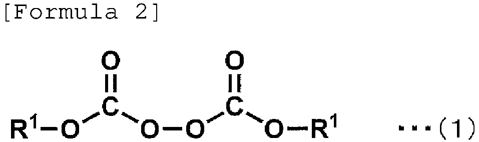 (In Formula (1), each of R¹ independently represents an unsaturated hydrocarbon group having 2 to 12 carbon atoms. The unsaturated hydrocarbon group may be interrupted by any one or more of -CO-O-, -O-CO-, and -O-.)

### <Monomer mixture>

The monomer mixture of the present invention is a monomer component containing monomers. The monomers are not limited as long as they can be synthesized with the following production method by using the microcapsule containing a volatile substance inside and the obtained polymer does not dissolve in the volatile substance. In the monomer mixture, from a viewpoint of giving a gas barrier property, heat resistance, and solvent resistance to the heat-expandable microcapsule, a nitrile based monomer is preferably used as the monomer of the present invention.

Examples of the nitrile based monomer include acrylonitrile, methacrylonitrile, fumaronitrile, 3-ethoxyacrylonitrile, and crotononitrile. Among these, acrylonitrile and methacrylonitrile are preferable. At least one type of the nitrile based monomers is used, and two types or more of the nitrile based monomers can be used.

If the monomer mixture contains the nitrile based monomer, from a viewpoint of giving a gas barrier property, heat resistance, and solvent resistance to the heat-expandable microcapsule, the amount of the nitrile based monomer in the monomer mixture is preferably 25% by mass or more and 100% by mass or less, more preferably 50% by mass or more, and further preferably 75% by mass or more.

From the viewpoint of increasing the polymerization speed by acrylonitrile and improving the storage modulus of the polymer and the gas barrier property by methacrylonitrile, acrylonitrile and methacrylonitrile are preferably used together. In this case, the mass ratio of acrylonitrile to methacrylonitrile (acrylonitrile/methacrylonitrile) is preferably 10/90 or more and 90/10 or less, more preferably 20/80 or more and 80/20 or less and further preferably 30/70 or more and 70/30 or less. If the mass ratio of acrylonitrile to methacrylonitrile is more than 90/10, the foaming starting temperature may be low or the foaming ratio at a high temperature may be small. If the mass ratio of acrylonitrile to methacrylonitrile is less than 10/90, the polymerization may not be completed sufficiently and the foaming ratio may be small.

Other monomers besides the nitrile based monomer can be used as the monomer in the monomer mixtures. Depending on the type and the composition of other monomers, the foaming starting temperature and the maximum foaming temperature, and the maximum foaming ratio of the heat-expandable microcapsule can be adjusted to produce a heat-expandable microcapsule in accordance with the purpose of use.

Other monomers are not particularly limited as long as they can co-polymerize with the nitrile based monomer. Examples of other monomers include monomers having a carboxyl group such as (meth)acrylic acid, itaconic acid, maleic acid, crotonic acid, citraconic acid, fumaric acid, cinnamic acid, vinylbenzoic acid, mono(2-(meth)acryloyloxyethyl)succionate, mono(2-(meth)acryloyloxyethyl)phthalate, mono(2-(meth)acryloyloxyethyl)maleate, and ω-carboxy-polycaprolactone mono(meth)acrylate; (meth)acrylamide based monomers such as (meth)acrylamide, N,N-dimethyl(meth)acrylamide, N-isopropyl(meth)acrylamide, N,N-dimethylamonopropyl(meth)acrylamide, diacetone(meth)acrylamino, and (meth)acryloylmorpholine; alkyl(meth)acrylate such as methyl(meth)acrylate, ethyl(meth)acrylate, butyl(meth)acrylate, tert-butyl(meth)acrylate, 2-ethylhexyl(meth)acrylate, lauryl(meth)acrylate, and stearyl(meth)acrylate; ester compounds of (meth)acrylic acid and aliphatic alcohol such as cyclohexyl(meth)acrylate, isobornyl(meth)acrylate, dicyclopentanyl(meth)acrylate, and 2-ethyl-2-adamantyl(meth)acrylate; aryl(meth)acrylate such as phenyl(meth)acrylate and benzyl(meth)acrylate; monomers having a chain or cyclic bond such as methoxyethyl(meth)acrylate, methoxypolyethylene glycol(meth)acrylate, phenoxypolyethylene glycol(meth)acrylate, 2-phenylphenoxyethyl(meth)acrylate, tetrahydrofurfuryl(meth)acrylate, (2-methyl-2-ethyl-1,3-dioxolane-4-yl)methyl(meth)acrylate, (3-ethyloxetane-3-yl)methyl(meth)acrylate, and cyclictrimethylolpropaneformal(meth)acrylate; Monomers having a nitrogen atom such as N,N-dimethylaminoethyl(meth)acrylate, N-(meth)acryloyloxyethylhexahydrophthalimide, N-phenylmaleimide, N-cyclohexylmaleimide, N-vinylpyrolidone; styrene based monomers such as styrene, α-methystyrene, and ethylstyrene; vinylester based monomers such as vinylacetate and vinylpropionate; halogenated vinyl based monomers such as vinylchloride and vinylidene chloride; and vinylether based monomers such as methylvinylether, ethylvinylether, and isobutylvinylether. At least one type of other monomers described above is used, and two types or more of other monomers described above can be used.

Among these, monomers having a carboxyl group, (meth)acrylamide based monomers, alkyl(meth)acrylate, ester compounds of (meth)acrylic acid and aliphatic alcohol, aryl(meth)acrylate, styrene based monomers, vinylester based monomers, and halogenated vinyl based monomers are preferable; and (meth)acrylic acid, itaconic acid, maleic acid, (meth)acrylamide, methyl(meth)acrylate, ethyl(meth)acrylate, butyl(meth)acrylate, 2-ethylhexyl(meth)acrylate, isobornyl(meth)acrylate, benzyl(meth)acrylate, styrene, vinylacetate, and vinylidene chloride are more preferable.

If the monomer mixture contains the monomers having a carboxyl group and/or the (meth)acrylamide based monomers, from a viewpoint of giving heat resistance and solvent resistance to the heat-expandable microcapsule, the amount of the monomers having a carboxyl group and/or the (meth)acrylamide based monomers in the monomer mixture is preferably 10% by mass or more and more preferably 15% by mass or more, and preferably 40% by mass or less and more preferably 35% by mass or less.

If the monomer mixture contains any one of alkyl(meth)acrylate, ester compounds of (meth)acrylic acid and aliphatic alcohol, aryl(meth)acrylate, styrene based monomers, and vinylester based monomers, from a viewpoint of improving the appearance of the foamed molded article by easily adjusting the foaming characteristics such as the foaming starting temperature of the heat-expandable microcapsule and improving the dispersion into the matrix resin of the foamed molded article, the amount of any one of alkyl(meth)acrylate, ester compounds of (meth)acrylic acid and aliphatic alcohol, aryl(meth)acrylate, styrene based monomers, and vinylester based monomers in the monomer mixture is preferably 2% by mass or more and more preferably 3% by mass or more, and preferably 20% by mass or less and more preferably 15% by mass or less.

If the monomer mixture contains the halogenated vinyl based monomers, from a viewpoint of giving a gas barrier property to the heat-expandable microcapsule, the amount of the halogenated vinyl based monomers in the monomer mixture is preferably 5% by mass or more and more preferably 10% by mass or more, and preferably 40% by mass or less and more preferably 30% by mass or less.

In order to improve the foaming characteristics, heat resistance, solvent resistance, etc. of the heat-expandable microcapsule, a monomer having a functional group or a multifunctional monomer may be also used in the monomer mixture if necessary. If the monomer having a functional group or the multifunctional monomer are used, a crosslinking reaction can be performed between polymers and the shell formed with the polymer can be strengthened.

Examples of the monomer having a functional group include a monomer having a hydroxy group, a monomer having an isocyanate group, a monomer having an epoxy group, a monomer having an alkoxysilyl group, and a monomer having an allyl group. An example of the multifunctional monomer is an ester compound of polyalcohol and (meth)acrylic acid. At least one type of the monomers having a functional group and the multifunctional monomer is used, and two types or more of the monomers having a functional group and the multifunctional monomer can be used.

If the monomer mixture contains the monomer with a functional group and/or the multifunctional monomer, the amount of the monomers with a functional group and/or the multifunctional monomer in the monomer mixture is preferably 0.01% by mass or more and 5% by mass or less, and more preferably 0.1% by mass or more and 2% by mass or less.

### <Organic peroxide represented by Formula (1)>

The organic peroxide represented by Formula (1) of the present invention is an organic peroxide having a peroxydicarbonate structure and two or more ethylenically unsaturated bonds in the molecule. At least one type of the organic peroxides is used, and two types or more of the organic peroxides can be used. 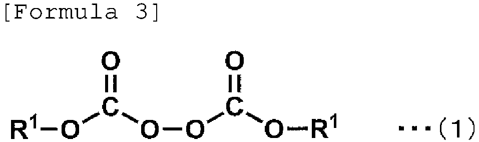 (In Formula (1), each of R¹ independently represents an unsaturated hydrocarbon group having 2 to 12 carbon atoms. The unsaturated hydrocarbon group may be interrupted by any one or more of -CO-O-, -O-CO-, and -O-.)

Because the organic peroxide represented with Formula (1) is an organic peroxide having a peroxydicarbonate structure, the 10-hour half-life temperature is normally 30°C or more and 50°C or less. The 10-hour half-life temperature (T10) means a temperature at which a half of the organic peroxide is decomposed in 10 hours when the solution, in which 0.05 Mol/L to 0.1 Mol/L of the organic peroxide is dissolved in benzene, is thermally decomposed.

The unsaturated hydrocarbon group in Formula (1) may be any of a straight chain group, a branched group, and a cyclic group. The number of carbons in the hydrocarbon group is preferably 2 or more and 10 or less, and more preferably 3 or more and 8 or less. The lower limit of the number of carbons is practically 2, and if the number of carbons is more than 12, it is not preferable because the polymerization activity deteriorates.

The position of the ethylenically unsaturated double bond in the unsaturated hydrocarbon group in Formula (1) is not limited. However, from a viewpoint of the copolymerization property with the monomer mixture, the ethylenically unsaturated double bond is preferably located at the end of the unsaturated hydrocarbon group. Examples of the ethylenically unsaturated double bond include a vinyl group, an isopropenyl group, a 2-butenyl group, an allyl group, a methallyl group, a vinylene group, an acryloyl group, a methacryloyl group, a maleoyl group, a fumaroyl group, and a styryl group. From a viewpoint of the copolymerization property with the monomers, a vinyl group, an allyl group, a methallyl group, an acryloyl group, and a methacryloyl group are preferable.

From a viewpoint of easily performing the synthesis of the organic peroxide represented by Formula (1), R¹ in Formula (1) is preferably any one or more of the polymerizable group represented by Formula (2) and the polymerizable group represented by Formula (3). 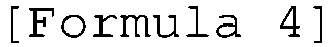 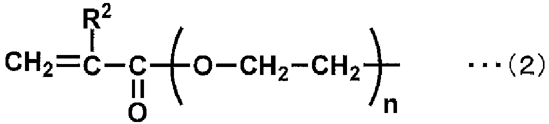 (In Formula (2), R² represents a hydrogen atom or a methyl group, and n represents an integer of 1 or 2.) 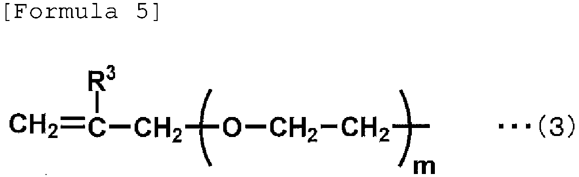 (In Formula (3), R³ represents a hydrogen atom or a methyl group, and m represents an integer of 0, 1 or 2.)

In Formula (2), n is preferably 1 from a viewpoint of the polymerization activity. In Formula (3), m is preferably 0 or 1 from a viewpoint of the polymerization activity.

Examples of the organic peroxide represented by Formula (1) include di(2-acryloyloxyethyl)peroxydicarbonate, di(2-(2'-acryloyloxyethyl)ethyl)peroxydicarbonate, di(2-methacryloyloxyethyl)peroxydicarbonate, di(2-(2'-methacyloyloxyethyl)ethyl)peroxydicarbonate, diallylperoxydicarbonate, di(2-allyloxyethyl)peroxydicarbonate, di(2-(2'-allyloxyethyl)ethyl)peroxydicarbonate, dimethacrylperoxydicarbonate, di(2-methacyloxyethyl)peroxydicarbonate, and di(2-(2'-methacryloxyethyl)ethyl)peroxydicarbonate. The organic peroxide represented by Formula (1) can be obtained with the production method described in JP-A-62-114956, etc. For example, alcohol (R¹-OH) in which R¹ is same as in Formula (1) is reacted with phosgene to synthesize chloroformate, and chloroformate is reacted with hydrogen peroxide and sodium hydroxide or potassium hydroxide to synthesize the organic peroxide represented by Formula (1). The reaction temperature is normally -5°C to 25°C. Examples of the reaction solvent include aromatic hydrocarbons such as toluene, ketones such as methylethylketone, ethers such as tetrahydrofuran, esters such as ethylacetate, and halogenated hydrocarbons such as methylenechloride. After the reaction, an excess amount of raw materials and byproducts are removed by washing with ion exchange water or a basic aqueous solution such as sodium hydrogencarbonate, sodium carbonate, sodium hydroxide, and potassium hydroxide to purify the objective substance.

The amount of the organic peroxide represented by Formula (1) to 100 parts by mass of the monomer mixture is preferably 0.01 parts by mass or more and 10 parts by mass or less, more preferably 0.05 parts by mass or more and 6 parts by mass or less, and further preferably 0.1 parts by mass or more and 4 parts by mass or less. If the amount of the organic peroxide represented by Formula (1) to 100 parts by mass of the monomer mixture is less than 0.01 parts by mass, the foaming ratio tends to become small because a sufficient amount of the branch structure cannot be formed and the melt tension cannot be improved. If the amount of the organic peroxide represented by Formula (1) to 100 parts by mass of the monomer mixture is more than 10 parts by mass, the foaming ratio tends to become small because the molecular weight decreases. A multi-branched polymer having a high molecular weight can be effectively produced by using the preferable amount of the organic peroxide. As a result, a heat-expandable microcapsule can be obtained in which the breaking of the shell and the degassing do not occur for a long period of time in a high temperature range and during the molding process.

When the organic peroxide represented by Formula (1) is reacted with the monomer mixture, a polymerization initiator can be used to adjust the molecular weight and the degree of branching of the polymer, to improve the productivity, and to reduce the amount of the remaining monomers. The polymerization initiator is not particularly limited and any of the polymerization initiators generally used in this field can be used. However, an oil-soluble polymerization initiator is preferable that can be dissolved in the monomer mixture.

Examples of the polymerization initiator include peroxydicarbonates such as di-n-propylperoxydicarbonate, diisopropylperoxydicarbonate, di-n-propylperoxydicarbonate, di-sec-butylperoxydicarbonate, di-2-ethylhexylperoxydicarbonate, bis-(4-t-butylcyclohexyl)peroxydicarbonate, di-2-ethoxyethylperoxydicarbonate, and di-methoxybutylperoxydicarbonate; peroxyesters such as t-butylperoxyneodecanoate, t-aminoperoxyneodecanoate, t-hexylperoxyneodecanoate, 1,1,3,3-tetramethylbutylperoxyneodecanoate, 1-cyclohexyl-1-methylethylperoxyneodecanoate, cumylperoxyneodecanoate, (α,α'-bis-neodecanoylperoxy)di-isopropylbenzene, t-butylperoxypivalate, t-amylperoxypivalate, t-hexylperoxypivalate, t-butylperoxy-2-ethyl-hexanoate, t-amylperoxy-2-ethylexanoate, t-hexylperoxy-2-ethylhexanoate, 1,1,3,3-tetramethylbutylperoxy-2-ethylhexanoate, and 2,5-dimethyl-2,5-bis(2-ethylhexanoylperoxy)hexane; diacylperoxides such as diisobutylperoxide, bis(3,5,5-trimethylhexanoyl)peroxide, dilauroylperoxide, bis(3-carboxypropyonyl)peroxide, and dibenzoylperoxide; and azo compounds such as 2,2'-azobis(4-methoxy-2,4-dimethylvaleronitrile, 2,2'-azobis(2,4-dimethylvaleronitrile), 2,2'-azobis(isobutyronitrile), 2,2'-azobis(2-methylbutyronitrile), and 2,2'-azobis(2-methylpropionate) dimethyl. At least one type of the polymerization initiators is used, and two types or more of the polymerization initiators can be used.

The 10-hour half-life temperature of the polymerization initiator is preferably 20°C or more and 80°C or less, more preferably 25°C or more and 60°C or less, and further preferably 30°C or more and 50°C or less. If the 10-hour half-life temperature of the polymerization initiator is lower than 20°C, the monomer remains and the foaming ratio tends to become small because the decomposition of the polymerization initiator is too fast. If the 10-hour half-life temperature of the polymerization initiator is higher than 80°C, the foaming ratio may be decreased due to the crosslinking of the polymer during foam-molding or coloring of the foamed molded article may occur because a large amount of the polymerization initiator remains in the polymer after polymerization. The 10-hour half-life temperature (T10) means a temperature at which a half of the polymerization initiator is decomposed in 10 hours when the solution, in which 0.05 Mol/L to 0.1 Mol/L of the polymerization initiator is dissolved in benzene, is thermally decomposed.

In case of using the polymerization initiator, the amount of the polymerization initiator to 100 parts by mass of the monomer mixture is preferably 0.1 parts by mass or more and 8 parts by mass or less, more preferably 0.2 parts by mass or more and 5 parts by mass or less, and further preferably 0.3 parts by mass or more and 3 parts by mass or less. If the amount of the polymerization initiator to 100 parts by mass of the monomer mixture is less than 0.1 parts by mass, the effect of the polymerization initiator may not be exhibited because the polymerization is not completed. If the amount of the polymerization initiator to 100 parts by mass of the monomer mixture is more than 8 parts by mass, the foaming ratio tends to become small because the molecular weight decreases.

In case of using the polymerization initiator, the mass ratio of the organic peroxide represented by Formula (1) to the polymerization initiator (organic peroxide represented by Formula (1)/polymerization initiator) can be appropriately selected depending on the purpose of use and it is not particularly limited. However, the mass ratio of the organic peroxide represented by Formula (1) to the polymerization initiator is preferably 5/95 or more and more preferably 15/85 or more; and preferably 95/5 or less and more preferably 85/15 or less. If the mass ratio of the organic peroxide represented by Formula (1) to the polymerization initiator is outside of these preferred ranges, the effect of compounding the polymerization initiator may not be exhibited.

### <Volatile substance>

The volatile substance of the present invention is a substance contained in the heat-expandable microcapsule. A liquid is used as the volatile substance that does not dissolve the polymers described above and has a boiling temperature that is equal to or less than the foaming starting temperature (Tₛ) of the heat-expandable microcapsule. The foaming starting temperature (Tₛ) can be obtained by suing the thermomechanical analyzer (TMA) described later.

Examples of the volatile substance include hydrocarbons having 20 or less carbon atoms such as propane, n-butane, isobutene, butene, isobutene, n-pentane, isopentane, neopentane, petroleum ether, n-hexane, cyclohexane, n-heptane, methylcyclohexane, n-octane, isooctane, nonane, decane, isodecane, normal paraffin, an isoparaffin mixture; alcohols having 14 or less carbon atoms such as butanol, t-butanol, and cyclohexanol; chlorofluorocarbons such as CCl3F, CCl2F2, CClF3, and CClF2-CClF2; tetraalkylsilanes such as tetramethysilane, trimethylsilane, and trimethylisopropylsilane; and substances such as azodicarbonamide that decompose at a temperature equal to or less than the softening point of the polymer and generate gas. Among these, n-butane, isobutene, n-pentane, isopentane, petroleum ether, n-hexane, isooctane, and isodecane are preferable. At least one type of the volatile substances is used, and two types or more of the volatile substances can be used.

The amount of the volatile substance to 100 parts by mass of the monomer mixture is preferably 5 parts by mass or more and 50 parts by mass or less, more preferably 10 parts by mass or more and 40 parts by mass or less, and further preferably 15 parts by mass or more and 35 parts by mass or less.

The volatile substance may be used together with a liquid having a boiling temperature that is equal to or more than the foaming starting temperature (Tₛ) to control the foaming behavior of the heat-expandable microcapsule.

### <Production method for heat-expandable microcapsule>

The production method for the heat-expandable microcapsule of the present invention is a production method for the heat-expandable microcapsule including at least a step of dispersing an oily mixed liquid containing the monomer mixture, the organic peroxide represented by Formula (1), and the volatile substance into an aqueous dispersion medium to obtain a dispersion (dispersion step) and a step of reacting the monomer mixture with the organic peroxide represented by Formula (1) in the obtained dispersion to polymerize the monomer mixture (polymerization step).

### <Oily mixed liquid>

The oily mixed liquid of the present invention is a mixed liquid (mixture) containing at least the monomer mixture, the organic peroxide represented by Formula (1), and the volatile substance. The oily mixed liquid may contain a chain transfer agent, an antioxidant, a photostabilizer, an ultraviolet absorbent, an antistatic agent, a flame retardant, a pigment, a dye, a silane coupling agent, and an antifoaming agent as necessary.

### <Aqueous dispersion medium>

The aqueous dispersion medium is a medium having water as a main component for dispersing the oily mixed liquid. Examples of the water include ion exchange water and distilled water. The aqueous dispersion medium may also contain alcohol such as methanol, ethanol, and propanol; and an aqueous organic solvent such as acetone.

The amount of the aqueous dispersion medium to 100 parts by mass of the monomer mixture is preferably 70 parts by mass or more and 1,000 parts by mass or less, and more preferably 100 parts by mass or more and 900 parts by mass or less.

The aqueous dispersion medium may contain a dispersion stabilizer. Examples of the dispersion stabilizer include colloidal silica, alumina sol, calcium phosphate, magnesium hydroxide, aluminum hydroxide, barium sulfate, barium carbonate, calcium carbonate, and magnesium pyrophosphate. Among these, silica is preferable. At least one type of the dispersion stabilizers is used, and two types or more of the dispersion stabilizers can be used.

In case of using the dispersion stabilizer, the amount of the dispersion stabilizer to 100 parts by mass of the monomer mixture is preferably 0.1 parts by mass or more and 30 parts by mass or less, and more preferably 0.5 parts by mass or more and 15 parts by mass or less.

The aqueous dispersion medium may contain a water-soluble or water-dispersible dispersion stabilization auxiliary. Examples of the dispersion stabilization auxiliary include diethanolamine-aliphatic dicarboxylic acid condensates (such as a diethanolamine-adipic acid condensate and a diethanolamine-itaconic acid condensate), an urea-formaldehyde condensate, polyvinylpyrolidone, polyethyleneimine, polyoxyethylenealkylamine, polydialkylaminoalkyl (meth)acrylate (such as polydimethylaminoethyl (meth)acrylate), polydialkylaminoalkyl (meth)acrylamide (such as polydimethylaminopropyl (meth)acrylamide), poly(meth)acrylamide, cationic poly(meth)acrylamide, polyaminesulfone, polyallylamine, pollyethyleneoxide, polyvinylalcohol, polyetyrenesulfonate, gelatin, methylcellulose, dialkylsulfosuccinate, sorbitan aliphatic ester, polyoxyethylenealkylether phosphate, and tetramethylammonium hydroxide or chloride. Among these, a diethanolamine-aliphatic dicarbonate condensate and polyninylpyrrolidone are preferable. The acid number of the diethanolamine-aliphatic dicarbonate condensate is preferably 60 mgKOH/g or more and 140 mgKOH/g or less, and more preferably 65 mgKOH/g or more and 120 mgKOH/g or less. At least one type of the dispersion stabilization auxiliaries is used, and two types or more of the dispersion stabilization auxiliaries can be used.

In case of using the dispersion stabilization auxiliary, the amount of the dispersion stabilization auxiliary to 100 parts by mass of the monomer mixture is preferably 0.05 parts by mass or more and 10 parts by mass or less, and more preferably 0.1 parts by mass of more and 5 parts by mass or less.

From a viewpoint of obtaining the heat-expandable microcapsules having a more uniform particle shape, the aqueous dispersion medium may contain electrolyte. Examples of the electrolyte include sodium chloride, potassium chloride, magnesium chloride, calcium chloride, zinc chloride, sodium sulfate, magnesium sulfate, ammonium sulfate, sodium carbonate, potassium carbonate, sodium hydroxide, and potassium hydroxide. Among these, sodium chloride is preferable. At least one type of the electrolytes is used, and two types or more of the electrolytes can be used.

In case of using the electrolyte, the amount of the electrolyte to 100 parts by mass of the monomer mixture is preferably 200 parts by mass or less, and more preferably 0.5 parts by mass or more and 50 parts by mass or less.

From a viewpoint of preventing the aggregation of the heat-expandable microcapsules during polymerization and the attachment of the scales to the inner face of the polymerization reactor, the aqueous dispersion medium may contain a polymerization auxiliary. Examples of the polymerization auxiliary include alkali metal nitrites such as sodium nitrite and potassium nitrite; water-soluble ascorbic acid; water-soluble vitamin B compounds; water-soluble polyphenols; water-soluble phosphoric acid, and boric acid. At least one type of the polymerization auxiliaries is used, and two types or more of the polymerization auxiliaries can be used.

In case of using the polymerization auxiliary, the amount of the polymerization auxiliary to 100 parts by mass of the monomer mixture is preferably 0.001 parts by mass or more and 1 part by mass or less, and more preferably 0.005 parts by mass or more and 0.1 parts by mass or less.

The aqueous dispersion medium can be adjusted by adding each of the components such as the dispersion stabilizer, the dispersion stabilization auxiliary, the electrolyte, and the polymerization auxiliary into water if necessary. The order of adding each of the components is not particularly limited. For example, the dispersion stabilizer is added into water; and the dispersion stabilization auxiliary, the electrolyte, and the polymerization auxiliary, etc. are added to adjust the aqueous dispersion medium.

The pH of the aqueous dispersion medium is preferably adjusted depending on the type of the dispersion stabilizer and the dispersion stabilization auxiliary. If colloidal silica is used as the dispersion stabilizer, hydrochloric acid, etc. is preferably added to adjust the pH of the aqueous dispersion medium from 3 to 4.

### <Dispersion step>

In the production method for the heat-expandable microcapsule of the present invention, the oily mixed liquid is added to the aqueous dispersion medium and the mixture is stirred (dispersed) to adjust a dispersion in the dispersion step. The method of adding the oily mixed liquid into the aqueous dispersion medium is not particularly limited and may be any one of the methods of adding the oily mixed liquid all at once, of dividing the oily liquid into portions and adding the divided oily liquid, and of adding the oily mixed liquid continuously. If it is necessary to avoid the polymerization of the monomer mixture in the dispersion step, an oily mixed liquid which does not contain the organic peroxide represented by Formula (1) and the polymerization initiator may be added first in the aqueous dispersion medium to adjust the dispersion, and the organic peroxide represented by Formula (1) and the polymerization initiator may be added next in the dispersion and stirred (dispersed) to adjust the dispersion.

A known stirrer (disperser) such as a homomixer, a homonizer, a static mixer, and an ultrasonic disperser may be used as the stirrer (disperser) in the dispersion step. The stirrer (disperser) may be a batch type or a continuous type.

The stirring (dispersion) temperature in the dispersion step is preferably 0°C or more and 40°C or less, and more preferably 5°C or more and 30°C or less. The stirring (dispersion) time in the dispersion step is preferably 1 minute or more and 120 minutes or less and more preferably 3 minutes or more and 60 minutes or less.

The average particle size of the oil droplets in the dispersion is preferably adjusted to be mostly the same as the average particle size of the objective heat-expandable microcapsule, preferably 1 µm or more and 500 µm or less, more preferably 3 µm or more and 300 µm or less, and further preferably 5 µm or more and 200 µm or less. The average particle size of the oil droplets in the dispersion can be adjusted by the types and the amounts of the dispersion stabilizer and the dispersion stabilization auxiliary and the rotation, the process time, etc. of the stirrer (disperser).

### <Polymerization step>

In the production method for the heat-expandable microcapsule of the present invention, the polymerization step is performed for example by heating the dispersion obtained in the dispersion step while being stirred in a deaerated or a nitrogen-replaced reactor. The decomposition method for the organic peroxide represented by Formula (1) and the polymerization initiator is not particularly limited, and any method may be used such as a method of decomposing by heat, a method of decomposing by light, and a redox decomposition method by using an accelerator, etc.

The stirring may be performed gradually to prevent the floating of the oil droplets and the floating or the sedimentation of the heat-expandable microcapsules after polymerization. As the polymerization progresses, the insoluble polymers precipitate at the interface to water in the oily mixture to voluntarily form a shell, and a heat-expandable microcapsule can be obtained with the volatile substance contained in the shell.

The temperature in the polymerization step is preferably 30°C or more and 90°C or less, and more preferably 40°C or more and 80°C or less. The polymerization time in the polymerization step is preferably 1 hour or more and 40 hours or less, and more preferably 3 hours or more and 20 hours or less. In the polymerization step, the polymerization may be performed while keeping the temperature constant. The polymerization may be performed while gradually or continuously increasing the temperature to improve the productivity and to reduce the amount of the remaining monomers and the amounts of the organic peroxide represented by Formula (1) and the polymerization initiator.

The amount of the monomers remaining in the heat-expandable microcapsule after the polymerization step to the total amount of the monomers that are used is preferably 0.5% by mass or less, more preferably 0.3% by mass or less, further preferably 0.1% by mass or less, and most preferably no remaining monomer. If the amount of the remaining monomers is more than 0.5% by mass, it is not preferable because the polymer constituting the shell is plasticized by the remaining monomers and the foaming ratio becomes small. The amount of the remaining monomers can be measured by making the heat-expandable microcapsule to dissolve or swell in a solvent such as N,N-dimethylformamide (DMF) and performing gas chromatography on the solution.

The heat-expandable microcapsules in which each of the shell formed by the polymer contain the volatile substance are synthesized in the state where the heat-expandable microcapsules are dispersed in the aqueous dispersion medium. The heat-expandable microcapsules dispersed in the aqueous dispersion medium are separated with a known method such as sedimentation, filtration, and centrifugal dehydration (separation step). The separation step may be repeated while washing as necessary.

The heat-expandable microcapsules separated from the aqueous dispersion medium can be dried at a relatively low temperature of the degree that the heat-expandable microcapsules do not thermally expand (drying step). The drying step may be performed at a normal pressure or a reduced pressure. The drying step can be performed under a nitrogen gas flow to enhance the drying efficiency. Further, as necessary, the heat-expandable microcapsules separated from the aqueous dispersion medium is heated preliminarily to control the foaming characteristics such as the foaming starting temperature (Tₛ) of the heat-expandable microcapsule (preliminary heating step). In the preliminary heating step, the heat-expandable microcapsules are preferably treated at a temperature from 5°C to 80°C lower than a foaming starting temperature (T_{s'}) of the heat-expandable microcapsule separated from the aqueous dispersion medium and more preferably at a temperature from 10°C to 70°C lower than the foaming starting temperature (T_{s'}). The time of the preliminary heating step is preferably from 5 seconds to 60 minutes and more preferably from 10 seconds to 30 minutes. Because the foaming starting temperature (T_{s'}) of the heat-expandable microcapsule separated from the aqueous dispersion medium can be lowered approximately by 3°C to 60°C for example in the preliminary heating step, the conditions of the preliminary heating step can be appropriately selected to obtain the desired foaming characteristics.

### <Foamed molded article>

For example, for a foamed molded article of the present invention, the heat-expandable microcapsules or a master batch containing the heat-expandable microcapsules can be added to a matrix resin such as a thermoplastic resin, the matrix resin with the heat-expandable microcapsules is molded with a molding method such as injection molding, the heat-expandable microcapsules are foamed due to the heat during molding to manufacture a foamed molded article.

The thermoplastic resin is not particularly limited and examples include thermoplastic resins such as polyvinylchloride, polypropylene, polyethylene, an ethylene-vinylacetate copolymer, polyvinylalcohol, polystyrene, a styrene-acrylonitrile-butadiene copolymer, an acrylic resin, and polyethyleneoxide; engineering plastics such as polyamide, polycarbonate, polyethyleneterephthalate, polybutyleneteraphthalate, polyacetal, and polyphenylenesulfite; and styrene-based, olefin-based, vinylchloride-based, polyethylenechloride-based, chlorosulfonated ethylene-based, polyester-based, urethane-based, and amide-based thermoplastic elastomers. At least one type of the thermoplastic resins is used, and two types or more of the thermoplastic resins can be used.

The amount of the heat-expandable microcapsules used to 100 parts by mass of the thermoplastic resin is preferably 0.2 parts by mass or more and 20 parts by mass or less, and more preferably 1 part by mass or 10 parts by mass or less. A known foaming agent such as a chemical foaming agent and a physical foaming agent may be used to adjust the foaming size and the foaming ratio. Examples of the chemical foaming agent include azodicarbonamide; hydrazodicarbonamide; azobisisobutylonitrile; sodium hydrogen carbonate; and a mixture of citric acid and monoalkali metal salt such as a mixture of sodium hydrogen carbonate and citric acid and a mixture of citric acid and sodium. Examples of the physical foaming agent include carbon dioxide gas, liquefied carbon dioxide gas, supercritical carbon dioxide gas, hydrocarbons, hydrochlorofluorocarbons, and hydrofluorocarbons.

An example of the method of producing the master batch includes a method of adding the heat-expandable microcapsules of the present invention to the thermoplastic resin or the thermoplastic resin in which various additives are added in advance, kneading the mixture at a temperature equal to or less than the foaming starting temperature by using a same direction twin screw extruder, and cutting the kneaded mixture into pallets having a desired size by using a pelletizer. The thermoplastic resin, the heat-expandable microcapsules of the present invention, and various additives may be kneaded by using a batch-type kneader such as a pressurizing kneader and a Banbury mixer, and the kneaded mixture may be formed into pellets by using a granulator.

Examples of the molding method for the foamed molded article include injection molding, extrusion molding, calendar molding, and kneading molding. Examples of the injection molding include core back injection molding and short shot injection molding.

The heat-expandable microcapsules of the present invention can be used in various applications such as an adhesive, a releasing agent for an adhesive, a sealing agent, foaming ink, mat paint, slide preventing paint, wallpaper, shoe soles, synthetic leather, unwoven cloth, undercoating for automobiles, weather strips, tire tread, interior for automobiles, and synthetic woods in order to reduce the weight and to provide functions such as porosity, sound insulation, heat insulation, shock resistance, a slipping property, and a cushioning property. Particularly, the heat-expandable microcapsules can be preferably used for reducing weight of plastic moldings used as the interior of the automobiles that requires strength and high quality appearance. In the various applications described above, the heat-expandable microcapsules may be foamed (expanded) in advance or used without being foamed.

### EXAMPLES

The present invention will be explained in detail with examples below. However, the present invention is not limited to these examples.

### <Example 1>

### <Production of heat-expandable microcapsules>

12.5 g of a colloidal silica water dispersion with a solid content of 20% by mass (trade name "SNOWTEX-O" manufactured by Nissan Chemical Corporation), 0.075 g of polyvinylpyrolidone, and 52 g of sodium chloride were mixed in 198 g of ion exchange water. Hydrochloric acid of 36% by mass was added to the mixture so that the pH of the mixture became 3.0, and an aqueous dispersion medium was prepared.

20.0 g of acrylonitrile, 19.2 g of methacrylonitrile, and 10.9 g of methacrylic acid (mass ratio: acrylonitrile/methacrylonitrile/methacrylic acid = 40/38/22) as the monomer mixture; 15.0 g of isooctane (30 parts by mass to 100 parts by mass of the monomer mixture) as the volatile substance; and 3.26 g of di(2-methacryloyloxyethyl)peroxydicarbonate (purity: 46% by mass, an ethylacetate solution, 3.0 parts by mass as a pure content excluding a diluent to 100 parts by mass of the monomer mixture) as the organic peroxide represented by Formula (1) (hereinafter, also referred to as Organic Peroxide A1) were mixed, and an oily mixed liquid was prepared.

The aqueous dispersion medium and the oily mixed liquid were stirred at 20°C or less and 2,400 rpm for 8 minutes by using a homomixer (T.K Homomixer MARK II manufactured by Tokushu Kika Kogyo Co., Ltd.) to disperse the oily mixed liquid into the aqueous dispersion medium. The obtained dispersion was charged in a reactor with a stirrer and stirred at 300 rpm. After the atmosphere of the reactor is replaced with nitrogen, the dispersion was polymerized for 6 hours at a reaction temperature of 50°C and for 1 hour at 70°C. After cooling, the produced heat-expandable microcapsules were filtered and washed with ion exchange water and dried at 30°C under a reduced pressure for 6 hours to obtain the heat-expandable microcapsules. The average particle size of the obtained heat-expandable microcapsules was obtained by the laser diffraction particle distribution analysis described above. The foaming starting temperature (Tₛ), the maximum foaming temperature (Tₘₐₓ), the maximum displacement (Dₘₐₓ) were obtained by using the thermomechanical analyzer (TMA) described below, and the heat resistance was evaluated.

### <Measurement conditions of thermomechanical analyzer (TMA)>

250 µg of the sample was placed in an aluminum pan with 7 mm diameter and 1 mm depth. A thermomechanical analyzer (TMA) (TMA/SS6100 manufactured by SSI NanoTechnology Inc.) was used to heat the aluminum pan with the sample from 60°C to 350°C at a rising temperature speed of 5°C/min with a force of 0.1 N applied from top to measure a displacement in the direction perpendicular to the measurement terminal. A temperature at which the displacement started is the foaming starting temperature (Tₛ), and a temperature at which the maximum displacement (Dₘₐₓ) was achieved is the maximum foaming temperature (Tₘₐₓ). The heat resistance was evaluated by the temperature width (ΔT_{70%}) between the temperature at which the displacement became 70% of Dₘₐₓ and the maximum foaming temperature (Tₘₐₓ).

### <Examples 2 to 7 and Comparative Examples 1 to 7>

The heat-expandable microcapsules were produced with the same operations as in Example 1 except various compositions constituting the oily mixed liquid and their amounts and the polymerization temperature were changed to those shown in Table 1. The polymerization initiator was used together with the organic peroxide represented by Formula (1) or in place of the organic peroxide represented by Formula (1). The amounts of the organic peroxide represented by Formula (1) and the polymerization initiator are a pure content excluding a diluent. The physical properties of the obtained heat-expandable microcapsules were evaluated and the results were shown in Table 1.

**[Table 1]**

| | | Example | | | | | | | Comparative Example | | | | | | |
|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 |
| Monomer Mixture (Part by mass) | Acrylonitrile | 40 | 40 | 40 | 40 | 40 | 66 | 66 | 40 | 40 | 40 | 40 | 40 | 40 | 66 |
| | Methacrylonitrile | 38 | 38 | 38 | 38 | 38 | 31 | 31 | 38 | 38 | 38 | 38 | 38 | 38 | 31 |
| | Methacrylic acid | 22 | 22 | 22 | 22 | 22 | - | - | 22 | 22 | 22 | 22 | 22 | 22 | - |
| | Vinylacetate | - | - | - | - | - | 3 | 3 | - | - | - | - | - | - | 3 |
| | DPHA | - | - | - | - | - | - | - | - | 0.3 | 3.0 | - | - | - | 0.2 |
| | TMPTA | - | - | - | - | - | - | - | - | - | - | 0.3 | - | - | - |
| Volatile Substance (Part by mass) | Isooctane | 30 | 30 | 30 | 30 | 30 | 30 | 30 | 30 | 30 | 30 | 30 | 30 | 30 | 30 |
| Organic Peroxide represented by Formula (1) (Part by mass) | Organic Peroxide A1 | 3.0 | 1.5 | 1.0 | 0.5 | 1.0 | - | - | - | - | - | - | - | - | - |
| | Organic Peroxide A2 | - | - | - | - | - | 1.0 | - | - | - | - | - | - | - | - |
| | Oraganic Peroxide A3 | - | - | - | - | - | - | 1.0 | - | - | - | - | - | - | - |
| Polymerization Initiator (Part by mass) | Polymerization Initiator B1 | - | 3.0 | 2.0 | 2.5 | - | 2.0 | 2.0 | 3.0 | 3.0 | 3.0 | 3.0 | - | - | 3.0 |
| | Polymerization Initiator B2 | - | - | - | - | 2.0 | - | - | - | - | - | - | 3.0 | - | - |
| | Polymerization Initiator B3 | - | - | - | - | - | - | - | - | - | - | - | - | 3.0 | - |
| Reaction Conditions | Temperature (°C)/Time(h) | 50/6 | 50/6 | 50/6 | 50/6 | 60/6 | 50/6 | 50/6 | 50/6 | 50/6 | 50/6 | 50/6 | 60/6 | 85/15 | 50/6 |
| | Temperature (°C)/Time(h) | 70/1 | 70/1 | 70/1 | 70/1 | 80/1 | 70/1 | 70/1 | 70/1 | 70/1 | 70/1 | 70/1 | 80/1 | - | 70/1 |
| Physical Properties of Heat-Expandable Microcapsules | Average Particle Size (µm) | 39 | 32 | 29 | 27 | 35 | 30 | 28 | 28 | 38 | *1 | 29 | 34 | 35 | 25 |
| | Tₛ (°C) | 188 | 190 | 192 | 191 | 177 | 138 | 137 | 180 | 165 | - | 160 | 184 | 175 | 135 |
| | Tₘₐₓ (°C) | 248 | 268 | 255 | 253 | 245 | 171 | 168 | 198 | 211 | - | 200 | 203 | 205 | 164 |
| | Dₘₐₓ (µm) | 608 | 581 | 978 | 1,143 | 690 | 702 | 675 | 947 | 559 | - | 563 | 622 | 450 | 560 |
| | ΔT_{70%} (°C) | 88 | 113 | 86 | 91 | 71 | 56 | 58 | 40 | 46 | - | 35 | 33 | 42 | 32 |

In Table 1, DPHA is a mixture of dipentaerythritolpentaacrylate and dipentaerythritolhexaacrylate (Sigma-Aldrich Corporation); TMPTA is trimethylolpropanetriacylate (Tokyo Chemical Industry Co., Ltd.); Organic Peroxide A1 is di(2-methacryloyloxyethyl)peroxydicarbonate (purity: 46% by mass, ethylacetate solution); Organic Peroxide A2 is diallylperoxydicarbonate (purity: 40% by mass, toluene solution); Organic Peroxide A3 is di(2-allyloxyethyl)peroxydicarbonate (purity: 44% by mass, toluene solution); Organic Peroxide B1 is di-sec-butylperoxydicarbonate (tradename "PEROYL SBP" manufactured by NOF Corporation, purity: 50% by mass, hydrocarbon solution); Organic Peroxide B2 is t-butylperoxypivalate (trade name "PERBUTYL PV" manufactured by NOF Corporation, purity: 71% by mass, hydrocarbon solution); and Organic Peroxide B3 is 2,2-bis(4,4-di-t-butylperoxycyclohexyl)propane (trade name "PERTETRA A" manufactured by NOF Corporation, purity: 20% by mass, ethylbenzene solution).

"*1" means that a large amount of aggregates was produced during the reaction and no heat-expandable microcapsule was synthesized.

Fig. 1 shows the measurement results from TMA in Example 4 and Comparative Example 1. From the results in Fig.1, it is clear that the heat resistance was improved in a high temperature range of the heat-expandable microcapsules synthesized by using the organic peroxide represented by Formula (1) of the present invention. From the results in Fig. 1, it is also clear that the heat resistance was improved in a high temperature range of the heat-expandable microcapsules synthesized by using the organic peroxide represented by Formula (1) of the present invention compared to the heat-expandable microcapsules synthesized by using a small amount of multifunctional monomers or multifunctional organic peroxides without the organic peroxide represented by Formula (1).

## Claims

1. A heat-expandable microcapsule having a core-shell structure including a core and a shell,
wherein the core contains a volatile substance,
the shell contains a polymer, and
the polymer can be obtained by a reaction of a monomer mixture with an organic peroxide represented by Formula (1): 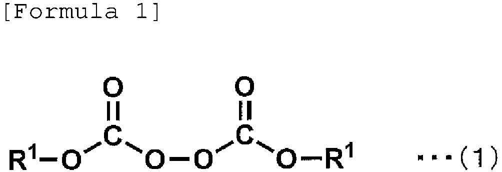 (In Formula (1), each of R¹ independently represents an unsaturated hydrocarbon group having 2 to 12 carbon atoms. The unsaturated hydrocarbon group may be interrupted by any one or more of -CO-O-, -O-CO-, and -O-.)

2. The heat-expandable microcapsule according to claim 1, wherein
R¹ in Formula (1) is any one or more of the polymerizable group represented by Formula (2) and the polymerizable group represented by Formula (3). 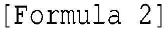 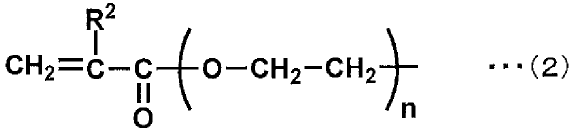 (In Formula (2), R² represents a hydrogen atom or a methyl group, and n represents an integer of 1 or 2.) 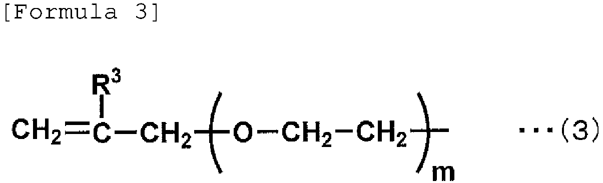 (In Formula (3), R³ represents a hydrogen atom or a methyl group, and m represents an integer of 0, 1 or 2.)

3. The heat-expandable microcapsule according to claim 1 or 2, wherein
the monomer mixture contains a nitrile based monomer and
an amount of the nitrile based monomer in the monomer mixture is 25% by mass or more and 100% by mass or less.

4. The heat-expandable microcapsule according to claim 3, wherein the monomer mixture further contains one type or more of the monomers selected from a group consisting of monomers having a carboxyl group, (meth)acrylamide based monomers, alkyl(meth)acrylate, ester compounds of (meth)acrylic acid and aliphatic alcohol, aryl(meth)acrylate, styrene based monomers, vinylester based monomers, and halogenated vinyl based monomers.

5. A production method for the heat-expandable microcapsule according to any of claims 1 to 4, comprising at least a step of dispersing an oily mixed liquid containing the monomer mixture, the organic peroxide represented by Formula (1), and the volatile substance into an aqueous dispersion medium to obtain a dispersion; and a step of reacting the monomer mixture with the organic peroxide represented by Formula (1) in the obtained dispersion to polymerize the monomer mixture.

6. A foamed molded article produced by using the heat-expandable microcapsule according to any of claims 1 to 4.
